# EUROPEAN PATENT SPECIFICATION

(11) **EP 1 462 462 B1**
(45) Date of publication and mention of the grant of the patent: **07.09.2005**
(21) Application number: 01274875.2
(22) Date of filing: 07.12.2001
(51) Int. Cl.: C08F 20/56, C08F 20/06, C08F 120/56, C08F 220/56, C08F 2/32, B01F 17/00

(54) **METHOD OF PRODUCING REVERSE MICROEMULSIONS FROM NON-IONIC POLYMERS OR IONIC COPOLYMERS**
VERFAHREN ZUR HERSTELLUNG VON UMGEKEHRTEN MIKROEMULSIONEN AUS NICHTIONISCHEN POLYMEREN ODER IONISCHEN COPOLYMEREN
PROCEDE DE PRODUCTION DE MICROEMULSIONS EAU DANS L'HUILE DE POLYMERES NON IONIQUES OU DE COPOLYMERES IONIQUES

(43) Date of publication of application: 29.09.2004
(73) Proprietor: Acideka, S.A., 48001 Bilbao (Vizcaya) (ES)
(72) Inventor: Ochoa Gomez, José Ramon, 28760 Tres Cantos (Madrid) (ES); Sasia Santos, Pedro Manuel, 48001 Bilbao (Vizcaya) (ES); Munoz Hernandez, Marta, Univ. Alfonso X El Sabio, 28691 Villanueva de la Canada (Madrid) (ES); Gomez Aliende, Nicomedes, 48001 Bilbao (Vizcaya) (ES); Valle Chausson, Beatriz, 1510 Minano (Alava) (ES); Rio Perez, Francisca, 01510 Minano (Alava) (ES); Escudero Sanz, Javier, 40200 Cuéllar (Segovia) (ES)
(74) Representative: Portela Gasch, Sergio Raul
(86) International application number: PCT/ES2001/000481
(87) International publication number: WO 2003/048218

(56) References cited:
- EP-A- 1 059 305
- FR-A- 2 565 592
- GB-A- 2 150 579
- US-A- 4 656 222
- US-A- 4 672 090
- US-A- 5 290 479
- HERNANDEZ-BARAJAS J. ET AL: 'Reaction engineering of acrylic water-soluble polymers' DECHEMA MONOGRAPHS (6TH INTERNATIONAL WORKSHOP ON POLYMER REACTION ENGINEERING) vol. 134, 1998, pages 523 - 543, XP002968788
- HUNKELER D., HERNANDEZ-BARAJAS J.: 'Heterophase water-in-oil polymerization of acrylamide by a hybrid inverse-emulsion/inverse-microemulsion process' POLYMER vol. 38, no. 22, 1997, pages 5623 - 5641, XP004090228
- KATIME I. ET AL: 'Synthesis and characterization of polyacrylamides in inverse-emulsions with an isoparaffinic solvent' MACROMOL. CHEM. PHYS. vol. 202, no. 9, June 2001, pages 1837 - 1843, XP002968789
- REKEN A. ET AL: 'Effect of the surfactant blend compositon on the properties of polymerizing acrlamide-based inverse-emulsions: characterization by small-angle neutron scattering and quasi-elastic light scattering' POLYMER vol. 40, 1999, pages 3545 - 3554, XP002968229

## Description

### FIELD OF THE INVENTION

The invention is related to the obtainment of nonionic polymers and ionic copolymers of high molecular weight, obtained by polymerization into a reverse microemulsion in the presence of an auto-reversible surfactant system in contact with an aqueous solution or suspension, capable of thermodynamically stabilizing the system, the polymer being constituted of acrylamide and the copolymer constituted of acrylamide and (meth)acrylic acid or a salt thereof, in an acrylamide to (meth)acrylic acid or a salt thereof mass ratio comprised between 100:0 and 40:60.

### BACKGROUND OF THE INVENTION

The solution of many technological drawbacks related to the acceleration and increase of efficacy of solid-liquid system separation processes requires the use of synthetic products of a polymeric nature, which have, among others, two fundamental properties: high molecular weight, desirably above 3.10⁶ g/mol and an ionic (anionic or cationic) charge in their molecules and which are generically known as polyelectrolytes.

These separation processes acquire great importance in such currently essential activities such as water purification (as flocculating agents in physical-chemical treatments and as sludge dehydration agents), paper manufacture (as retention and drainage agents at the work table), or mining (as coadyuvants in solid separation processes).

The currently existing flocculants are either marketed in a solid phase or in reverse emulsion. In the first case, their use requires the prior dissolution of the polymer, which is very cumbersome due to the slowness of its dissolution, as well as the need to prepare said solution daily. The marketing of the reverse emulsion flocculant decreases the time necessary for preparing the solution, but it has the drawback that the emulsions cannot be metered directly into the effluent to be treated nor are they thermodynamically stable, so that they therefore separate into the constituent phases. Accordingly, metering of the flocculant requires a prior emulsion homogenization step in the place in which it is going to be used. Furthermore, the process of polymerization into reverse emulsion implies the prior formation of the latter, which requires providing a high amount of mechanical power.

The previously mentioned drawbacks can be ignored by obtaining the flocculant directly in reverse microemulsion. Reverse microemulsions are stable and transparent or translucent water-in-oil systems, stabilized by surfactants.

The polymerization of water-soluble monomers into microemulsions was developed in the 1980s, acrylamide being the first monomer researched (F. Candau, *Polymerization in Organized Media,* C.M. Paelos (ed.), Gordon and Breach, Philadelphia, 1992, pp. 215-282). The polymerization of water-soluble monomers into a reverse microemulsion permits obtaining thermodynamically stable microemulsions with a particle size of less than 150 nm. The fact that the formation of the microemulsion does not require a large contribution of mechanical power (it can be carried out on a laboratory scale, for example, by manually stirring the aqueous and oily phase mixture) together with its thermodynamic stability permits ignoring the aforementioned drawbacks related to the obtainment of water-soluble polymers for use as flocculants by polymerization into reverse emulsion.

Since 1980, studies related to the obtainment of water-soluble polymers by reverse polymerization have been numerous. See, for example, US patent number 4,521,317, to Candau et al.; US patent number 4,681,912, to Durand et al.; the Holtzscherer et al. study "*Application of the Cohesive Energy Ratio Concept (CER) to the Formation of Polymerizable Microemulsions*", *Colloids and Surfaces,* 29 (1998); US patent number 4,954,538, to Dauplaise et al.; European patent EP 0 462 365, to Honig et al.; Chapter 21 *"Inverse Emulsion and Microemulsion Polymerization"*, by F. Candau, from the book *Emulsion Polymerization and Emulsion Polymers,* P.A. Lowell and M.S. El-Aasse eds., John Wiley & Sons Ltd, 1997; US patent numbers 5,512,184 and 6,037,406, to M.S. Ryan et al.; US patent number 6,130,303, to R.E. Neff et al., and US patent number 5,171,782, to F. Candau et al. French Patent application FR-A-2565592 describes a process of producing reverse microemulsions of acrylamide/acrylic acid copolymers by polymerization in the presence of a surfactant system comprising nonionic surfactants having HLB of 8-11.

All these patents and publications disclose processes for obtaining water-soluble polymers by polymerization into reverse microemulsion, in one or two steps, in the presence of a surfactant system. In all of them, surfactants and surfactant mixtures which can be used for achieving the desired purpose are mentioned, as well as the necessary optimal hydrophilic - lipophilic balance (HLB) interval.

However, none of said patents or publications focuses on the fact that the key to obtaining a stable reverse microemulsion is based on the features of the surfactant system. In fact, the almost universally used surfactant system is constituted of a mixture of sorbitol hexaoleate of HLB 10.2 (Atlas G1086, of ICI) and sorbitan sesquioleate of HLB 3.7 (Arlacel 83, of ICI). Although other surfactants are mentioned as an example, it is not clearly shown, as is done so by the inventors of the present invention, that not all surfactants permit obtaining stable reverse microemulsions after polymerization.

The previous studies have been focused on determining the optimal HLB interval for obtaining a stable reverse microemulsion and not on the chemical features of the surfactants used for achieving said optimal HLB interval. A special focus was made in the study of the influence of this last parameter, as is shown, for example, in the previously mentioned Holtzscherer et al. study "*Application of the Cohesive Energy Ratio Concept (CER) to the Formation of Polymerizable Microemulsions", Colloids and Surfaces,* 29 (1998), also studying the influence of the nature of the oil forming the continuous phase and of the presence of electrolytes in the aqueous phase in the formation of reverse microemulsions, but not of the chemical structure of the surfactant or surfactants composing the surfactant system. From such studies, the conclusion has been made that in order to obtain a microemulsion, it is necessary for the HLB to be comprised between 8 and 10 and that in order to stabilize it, the suitable surfactants are those in which the hydrophobic chain length is similar to that of the oil forming the microemulsion continuous phase. On the other hand, the larger the interfacial area between the phases forming the microemulsion, the greater its stability, which suggests the use of surfactants whose hydrophobic portion is very large. However, as will be shown by means of this invention, this is not enough for obtaining a stable microemulsion after polymerization of the monomer.

It is therefore an object of this invention to develop a process for obtaining reverse microemulsions from nonionic polymers or copolymers formed by water-soluble nonionic and anionic monomers by means of the use of a surfactant system with an HLB comprised between 8 and 10, comprising one or more nonionic surfactants, each one of them comprising one or more hydrophobic chains, chains which can be equal or different, containing more than 16 carbon atoms, preferably between 18 and 20 carbon atoms, and, at least, one double bond. In case the number of surfactants is equal to or greater than 3, said surfactant system can also optionally contain one or more nonionic surfactants of an HLB greater than or equal to 13 and/or an anionic surfactant.

A desirable feature of a reverse microemulsion for use as a flocculant is that it auto-reverses in contact with the aqueous solution or suspension in which it must accelerate the sedimentation of the solids in suspension. As is used in this description, "auto-reversal" means that when the microemulsion comes into contact with an aqueous solution or suspension (for example, residual water), a direct emulsion, in other words of oil-in-water, is formed without needing to add a reversing surfactant with a high HLB, such that the flocculating polymer of the microemulsion dissolves in said aqueous solution or suspension and gives way to the formation of floccules. This can be achieved by means of the same method used in the emulsion technology for transforming a reverse emulsion into an activated reverse emulsion, in other words, auto-reversible (see, for example, *"Study of inverting surfactants for inverse polyacrylamide emulsions",* I. Aksman and W. MacNamee, 3^{rd} Cesio International Surfactants Congress, London, 1-5 of June, 1992), a method which consists of adding to the reverse emulsion obtained after the polymerization a certain amount of a surfactant or a mixture of high HLB surfactants, typically higher than 12.

It is well known by skilled persons in the art that the stability of a microemulsion depends, among other factors, on the temperature. Therefore, it is desirable for a polymeric microemulsion for use as a flocculant to maintain its stability and capacity to be used as a carrier (necessary for facilitating its metering by conventional means such as, for example, pumps) in a broad temperature interval corresponding to the temperatures existing in winter and summer in different geographical locations, typically between 0°C and 40°C. As is well known by skilled persons in the art, such an effect can be achieved by means of adding a fluidizer and/or an anti-freeze, such as polyethylene glycol. However, it implies the addition of a new component, which is undesirable from the economic point of view.

It is therefore a further object of the present invention to develop a process for obtaining reverse microemulsions from nonionic polymers or from copolymers formed by nonionic and anionic monomers, of a high molecular weight and high solid content, for use, among others, as flocculants, such that the obtained microemulsion does not separate into phases and can be used as a carrier in the temperature interval comprised between 0°C and 40°C, typical interval in which the product storage facilities are located in winter and summer, without needing to add a fluidizing or anti-freeze agent.

### DETAILED DESCRIPTION OF THE INVENTION

The present invention refers to nonionic polymers and ionic polymers of high molecular weight, desirably above 3.10⁶ g/mol, obtained by polymerization into a reverse microemulsion in the presence of an auto-reversible surfactant system in contact with an aqueous solution or suspension, capable of thermodynamically stabilizing the microemulsion, the polymer being constituted of acrylamide and the copolymer constituted of acrylamide and (meth)acrylic acid or a salt thereof, at an acrylamide to (meth)acrylic acid or a salt thereof mass ratio comprised between 100:0 and 40:60.

The present invention also refers to a process for obtaining reverse microemulsions from acrylamide polymers or from copolymers of acrylamide and (meth)acrylic acid or a salt thereof, of high molecular weight, comprising the following steps:
a) preparing an aqueous phase, said aqueous phase comprising:
   a.1) water;
   a.2) a monomer to be polymerized selected from acrylamide and a mixture of monomers comprising, at least, acrylamide and, at least, (meth)acrylic acid or a salt thereof, at a total monomer concentration comprised between 20% and 40% by weight with regard to the total weight of the microemulsion, and an acrylamide to (meth)acrylic acid or a salt thereof mass ratio comprised between 100:0 and 40:60;
   a.3) optionally, a metal chelating agent; and
   a.4) optionally, a polymerization initiator;
   by means of the mixture of components a.1), a.2) and, optionally, a.3) and/or a.4);
b) separately preparing an oily phase, said oily phase comprising:
   b.1) a surfactant system whose HLB is comprised between 8 and 10, wherein said surfactant system comprises (i) at least two nonionic surfactants "A", one of which has an HLB comprised between 3 and 8, and the other one has an HLB comprised between 9.5 and 14, preferably between 9.8 and 11.5; each one of said nonionic surfactants comprising, at least, one hydrophobic chain containing more than 16 carbon atoms and, at least, one double bond; and (ii) at least one nonionic surfactant "B" with saturated hydrophobic chain or chains with an HLB equal to or grater than 12, preferably equal to or greater than 13; and
   b.2) an organic solvent
   by means of the mixture of components b.1) and b.2);
c) degasifying said aqueous and oily phases, together or separately, with an inert gas until the oxygen concentration in the phases is lower than 0.5 ppm;
d) mixing said aqueous and oily phases in inert atmosphere in case said aqueous and oily phases have been degasified separately,; and
e) polymerizing said aqueous and oily phase mixture in inert atmosphere.

As is used in this description, the term "(meth)acrylic acid or a salt thereof" includes acrylic acid as well as methacrylic acid and any salts thereof.

The formation of a reverse microemulsion depends on the suitable choice of the surfactant system, on its concentration and HLB, as well as on the temperature, nature of the oily phase and composition of the aqueous phase.

Contrary to what is deduced from the prior state of the art, not just any surfactant system is suitable for obtaining stable polymeric microemulsions, although the microemulsions formed by the monomers before polymerizing are suitable. The inventors of the present invention have surprisingly shown that in addition to the HLB of the surfactant system being comprised between 8 and 10, as indicated in the state of the art, the surfactant system proposed by this invention (occasionally identified in this description as surfactant system of the invention) must contain, at least, one or more nonionic surfactants, each one of them containing, at least, one hydrophobic chain with more than 16 carbon atoms, preferably between 18 and 20, and, furthermore, at least one double bond. With no intention of being related with any theory, a possible explanation for the need of said double bond is based on the possibility that a fraction of said nonionic surfactants could copolymerize with the monomers, thus forming part of the structure copolymer obtained, which would favor the stabilization of the microemulsion.

The surfactant system HLB suitable for forming a reverse microemulsion according to the present invention, before polymerization, should be comprised between 8 and 11, preferably between 8 and 10.5. However, for a microemulsion to remain stable after polymerization, it is necessary for the HLB to be comprised between 8 and 10, preferably between 9.2 and 9.6. Values higher than 9.6 can cause auto-reversal during the polymerization such that the microemulsion polymers and copolymers object of the present invention are not obtained, but rather an unmanageable polymer and copolymer mass is obtained. Values below 9.2 make the auto-reversal of the microemulsion difficult when it contacts an aqueous solution or suspension in order to act as a flocculant.

Said HLB values can be obtained by using a single nonionic surfactant or a nonionic surfactant mixture. However, it is preferable to use a mixture of two or more nonionic surfactants such that the HLB of at least one of the surfactants is comprised between 3 and 8, whereas the HLB of at least another one of them is comprised between 9.5 and 14, preferably between 9.8 and 11.5.

The concentration of the surfactant system of the invention must be enough so as to stabilize the microemulsion obtained after polymerization. Generally, the concentration should be comprised between 8% and 20% by weight, preferably 10% and 15% by weight, with regard to the total weight of the microemulsion. Lower values do not permit stabilizing the polymeric microemulsion, whereas higher values provide no technical advantage and imply an economic drawback.

The nature of the surfactant or of the surfactants forming the surfactant system of the invention is critical for the purposes of the present invention. Said surfactants are of the nonionic type and must have, at least, one hydrophobic chain with more than 16 carbon atoms, preferably between 18 and 20, and, furthermore, at least, one double bond (occasionally these nonionic surfactants are identified in this description as nonionic surfactants "A"). In case the nonionic surfactant "A" has more than one hydrophobic chain, these chains could be equal or different, normally equal. Among those nonionic surfactants "A", the following could be mentioned as an illustrative and non-limiting example: sorbitol and sorbitan esters such as polyethoxylated sorbitol hexaoleate, polyethoxylated sorbitan trioleate, polyethoxylated sorbitan sesquioleate, polyethoxylated sorbitol monooleate and sorbitan monooleate, polyethylene glycol esters such as polyethylene glycol monooleate and dioleate; ethoxylated fatty alcohols, such as polyethoxylated oleic and ricinoleic alcohol; polyethoxylated xylitol esters, such as polyethoxylated xylitol pentaoleate; polyethoxylated glycerin esters, such as polyethoxylated glycerin trioleate; and polyethoxylated trimethylolpropane esters, such as polyethoxylated trimethylolpropane trioleate.

For the purpose of achieving that the microemulsion auto-reverses in contact with an aqueous solution or suspension as well as its being stable in a broad temperature interval, particularly between 0°C and 40°C, the surfactant system of the invention, whose HLB must be comprised between 8 and 10, comprises, in addition to one or more nonionic surfactants "A", at least one nonionic surfactant (nonionic surfactant "B") in which all its hydrophobic chains are saturated and its HLB is higher than 12, preferably equal to or greater than 13, in an amount comprised between 2% and 20% by weight with regard to the total weight of the surfactant system used in the microemulsion, preferably between 5% and 15% by weight of the total weight of the surfactant system. Although any nonionic surfactant "B" of HLB greater than 12 can be used, those nonionic surfactants of the ethoxylated fatty alcohol type of HLB comprised between 13 and 18 are preferred. Likewise, if desired, in this case the surfactant system can also contain an anionic surfactant in an amount comprised between 0.1% and 10%, preferably between 0.1% and 2%, by weight with regard to the total weight of the surfactant system used in the microemulsion. Any anionic surfactant can be used in the present invention.

The oily or organic phase of the microemulsion is formed by the surfactant system and an organic solvent. The choice of the organic solvent of the microemulsion significantly influences the minimum surfactant system amount necessary for stabilizing it and the optimal HLB for forming it. This solvent can be an aliphatic or aromatic hydrocarbon or a mixture of aromatic and/or aliphatic hydrocarbons. The number of carbon atoms of the hydrocarbons can be comprised between 6 and 18, preferably between 10 and 14.

The aqueous phase of the microemulsion is composed of water, the monomers to be polymerized, and, optionally, (i) an additive necessary for preventing the inactivation of the polymerization due to the presence of metals, such as a metal chelating agent, for example EDTA (ethylenediaminetetraacetic acid) and/or NTA (nitrilotriacetic acid), and (ii) a polymerization initiator or a component of a redox pair polymerization initiator. In case the polymerization initiation is carried out by means of a redox pair, said aqueous phase will preferably comprise the oxidizing agent of the redox pair.

The aqueous phase monomers will either consist of a single nonionic vinyl monomer, such as acrylamide, or of a mixture of nonionic and ionic vinyl monomers, such as acrylamide and (meth) acrylic acid or a salt thereof, preferably sodium or potassium salt, at a total monomer concentration comprised between 20% and 40% by weight with regard to the total weight of the microemulsion and at an acrylamide to (meth)acrylic acid or its salts mass ratio comprised between 100:0 and 40:60. The preferred monomer concentration is, where applicable, 50% by weight.

The aqueous phase pH is comprised between 6 and 8, preferably between 7.3 and 7.5.

The organic phase to aqueous phase ratio is such that the total active substance (polymer or copolymer) concentration of the microemulsion, once polymerization is carried out, is comprised between 20% and 35% by weight, preferably between 25% and 30%, with regard to the total weight of the microemulsion.

The polymerization of the monomers is carried out by free radicals until the conversion of the monomers is equal to or greater than 60%, preferably, equal to or greater than 80%, more preferably, equal to or greater than 95%, and significantly preferably, 100%.

Polymerization initiation can be carried out at a temperature comprised between 10°C and 40°C, preferably between 25°C and 35°C. If polymerization is carried out discontinuously, in a single step, during the course of polymerization, the heat released is such that, taking into account the high polymerization rate, it is practically impossible to keep the temperature constant, the latter being able to increase up to values comprised between 60°C and 92°C, without this altering the quality of the obtained product.

For putting the present invention into practice, a wide variety of free radical polymerization initiators, thermal as well as redox pair initiators, can be used. Among those thermal initiators, it is worth mentioning 2,2'-azobisisobutyronitrile (AIBN), 2,2'-azobis(2-aminopropane) dihydrochloride (V-50), peroxides such as tert-butyl peroxide, and inorganic compounds, such as sodium persulfate. In case of using a thermal initiator, it can either be added initially to the aqueous phase or subsequently to the final microemulsion after degasifying. In the first case, it is necessary to carry out the degasification at a temperature comprised between 20°C and 30°C. Ammonium ferrous sulfate/ammonium persulfate and sodium disulfite/ammonium persulfate pairs can be mentioned from among the redox pairs. In case the polymerization initiation is carried out by means of a redox pair, the aqueous phase will comprise, preferably, the redox pair oxidizing agent. In case of using sodium disulfite (Na₂S₂O₅) as a reducer agent, it is not necessary to use an oxidizing agent since the polymerization can be carried out by using only sodium disulfite as an initiator (see Examples 22 to 31). Therefore, in a particular and preferred embodiment, polymerization is initiated by means of the exclusive use of sodium disulfite as an initiator, adding it continuously and in aqueous solution form over the deoxygenated microemulsion at a certain temperature. Where applicable, the concentration of the reducer agent present in the aqueous solution to be added over the deoxygenated microemulsion is comprised between 0.10 g/l and 400 g/l, preferably between 0.25 g/l and 5 g/l, more preferably between 0.5 g/ and 3 g/l.

The addition flow rate of the reducer agent solution depends on the reducer agent concentration therein. Thus, for example, for the preferred concentration range (3-6 g/l), the flow rate can range between 20 and 110 ml/h/kg of aqueous phase, preferably between 70 and 95 ml/h/kg of aqueous phase.

The polymerization reaction into reverse microemulsion reaction can be carried out discontinuously (in a single step or in several sequential aqueous phase addition steps) as well as continuously or semi-continuously. However, the preferred operation mode is the discontinuous mode in a single load, which is preferably carried out as follows:
a) preparing an aqueous phase, said aqueous phase comprising:
   a.1) water;
   a.2) a monomer to be polymerized selected from acrylamide and a mixture of acrylamide and (meth)acrylic acid or a salt thereof, at a total monomer concentration comprised between 20% and 40% by weight with regard to the total weight of the microemulsion, and at an acrylamide to (meth)acrylic acid or salts thereof mass ratio comprised between 100:0 and 40:60;
   a.3) optionally, a metal chelating agent, such as EDTA; and
   a.4) optionally, an oxidizing agent component of a redox pair free radical polymerization initiator, such as ammonium or potassium persulfate;
   by means of the mixture of components a.1), a.2), and, optionally, a.3) and/or a.4);
b) separately preparing an oily phase, said oily phase comprising:
   b.1) a surfactant system whose HLB is comprised between 8 and 10, preferably between 9.2 and 9.6, wherein said surfactant system comprises (i) at least two nonionic surfactants "A", one of which has an HLB comprised between 3 and 8, and the other one has an HLB comprised between 9.5 and 14, preferably between 9.8 and 11.5; each one of said nonionic surfactants comprising, at least, one hydrophobic chain containing more than 16 carbon atoms and, at least, one double bond; and (ii) at least one nonionic surfactant "B" with saturated hydrophobic chain or chains with an HLB equal to or greater than 12, preferably equal to or greater than 13; and
   b.2) an organic solvent
   by means of the mixture of components b.1) and b.2);
c) degasifying said aqueous and oily phases, together or separately, with an inert gas until the oxygen concentration therein is lower than 0.5 ppm;
d) mixing said aqueous and oily phases in inert atmosphere in case said aqueous and oily phases have been degasified separately; and
   polymerizing said aqueous and oily phase mixture in inert atmosphere by means of adding sodium disulfite in case said aqueous phase did not contain said oxidizing agent component of a redox pair free radical polymerization initiator (a.4), at a temperature comprised between 10°C and 40°C, preferably between 25°C and 35°C; or alternately
e') polymerizing said aqueous and oily phase mixture in inert atmosphere by adding a reducer agent capable of reducing said oxidizing agent component of a redox pair free radical polymerization initiator (a.4) present in said aqueous phase, at a temperature comprised between 10°C and 40°C, preferably between 25°C and 35°C

The polymeric microemulsions obtained according to the process of the present invention can have different applications. One of the main applications is their use as a flocculant since they have significant advantages in comparison with the currently marketed solid state or emulsion flocculants. Among said advantages are:
a) higher yield;
b) stability in the typical application temperature interval;
c) easy to meter by means of conventional metering devices; and
d) auto-reversal capacity in contact with an aqueous solution or suspension.

As will be seen in the following examples, the microemulsion flocculants obtained according to the method of the present invention have, when equally dosed, a yield as a flocculant which is equal to or better than that of the currently marketed emulsions of the same ionic charge, at the same time lacking the aforementioned drawbacks of the latter.

The following examples illustrate the invention and should not be considered as limiting of the invention but rather illustrative thereof.

### Example 1

An aqueous phase is prepared in a lined reactor by adding 0.2 g of ethylenediaminetetraacetic acid disodium salt and 0.135 g of ammonium persulfate to 90 g of a 50% by weight acrylamide aqueous solution. This aqueous phase is deoxygenated by bubbling nitrogen for 15 minutes.

An oily phase is prepared in another deposit by adding 30 g of a surfactant system of HLB 8.86, formed by 21 g of a polyethoxylated linear secondary fatty alcohol of HLB 7.9, and 9 g of a surfactant of the same type but of HLB 10.5, both with an average number of 13 carbon atoms in their hydrophobic chain, to 30 g of a paraffin oil formed by a mixture of n-decane and tetradecane at a 40:60 mass ratio. This oily phase is deoxygenated by bubbling nitrogen for 15 minutes.

The oily phase is slowly added to the aqueous phase in nitrogen atmosphere and by stirring. The mixture is deoxygenated again by bubbling nitrogen for 15 minutes. A completely transparent microemulsion is formed. Its temperature is adjusted to 40°C recirculating water at 41°C through the reactor liner.

Polymerization is initiated by adding a sodium disulfite aqueous solution (45 g/l) at a flow rate such that the polymerization temperature does not exceed 52°C. The reaction mass separates into phases during polymerization.

### Example 2

The process from example 1 is repeated, but with a surfactant system of the same HLB formed by 25.66 g of a polyethoxylated linear secondary fatty alcohol of HLB 7.9 and 4.33 g of a surfactant of the same type but of HLB 13.3, both with an average number of 13 carbon atoms in their hydrophobic chain.

The reaction mass separates into phases during polymerization.

### Example 3

The process of example 1 is repeated, but the amounts regarding the surfactants are adjusted so that the HLB is 9.

The reaction mass separates into phases during polymerization.

### Example 4

The process of example 1 is repeated, but the initial polymerization temperature is adjusted to 25°C.

The reaction mass separates into phases during polymerization.

### Example 5

The process of example 1 is repeated, but the initial polymerization temperature is adjusted to 30°C.

The reaction mass separates into phases during polymerization.

### Example 6

The process of example 1 is repeated, but the initial polymerization temperature is adjusted to 35°C.

The reaction mass separates into phases during polymerization.

### Example 7

An aqueous phase is prepared in a lined reactor by adding 13.99 g of demineralized water, 13.585 g of acrylic acid, and 7.626 g of sodium hydroxide pellets to 52.74 g of a 50% by weight acrylamide aqueous solution. The addition of sodium hydroxide is carried out in conditions such that the solution temperature at no time exceeds 35°C. Then, 0.442 g of ammonium persulfate and 0.152 g of ethylenediaminetetraacetic acid disodium salt are added with stirring. The pH is measured and if it is outside of the 7.3-7.5 interval, it is adjusted to said interval by adding either sodium hydroxide or acrylic acid. This aqueous phase is deoxygenated by bubbling nitrogen for 15 minutes. The monomer ratio is such that after polymerization, the copolymer ionic charge is 40%.

An oily phase is prepared in another deposit by adding 30 g of a surfactant system of HLB 8.68, formed by 21 g of a polyethoxylated linear secondary fatty alcohol of HLB 7.9 and 9 g of a surfactant of the same type but of HLB 10.5, both with an average number of 13 carbon atoms in their hydrophobic chain, to 41.479 g of a paraffin oil formed by a mixture of n-decane and tetradecane at a 40:60 mass ratio. This oily phase is deoxygenated by bubbling nitrogen for 15 minutes.

The oily phase is slowly added to the aqueous phase in nitrogen atmosphere and with stirring. The mixture is deoxygenated again by bubbling nitrogen for 15 minutes. A completely transparent microemulsion is formed. Its temperature is adjusted to 25°C.

Polymerization is initiated by adding a sodium disulfite aqueous solution (45 g/l) with a flow rate of 88.88 ml/h/kg of aqueous phase. The reaction mass separates into phases during polymerization.

### Example 8

Example 7 is repeated, but in this case the surfactant system is constituted of 19.5 g of a mixture of an ethoxylated oleic alcohol (HLB 4.9), polyethylene glycol 400 dilaurate (HLB 10.2) and an ethoxylated secondary alcohol (HLB 13.3) with 13 carbon atoms in their hydrophobic chain. The ratios among the surfactants are such that the surfactant system HLB is 9.6 and the ethoxylated secondary alcohol (HLB 13.3) ratio is 10% of the total surfactant weight.

The reaction mass separates into phases during polymerization.

### Example 9

Example 8 is repeated, but in this case the surfactant system is constituted of 19.5 g (13% by weight of the total weight of the microemulsion) of a mixture of an ethoxylated oleic alcohol (HLB 4.9) and polyethylene glycol 400 dilaurate (HLB 10.2) at ratios such that the surfactant system HLB is 9.2.

The reaction mass separates into phases during polymerization.

### Example 10

Example 8 is repeated, but in this case the surfactant system is constituted of 22.5 g (15% by weight of the total weight of the microemulsion) of a mixture of an ethoxylated oleic alcohol (HLB 4.9) and polyethylene glycol 400 dilaurate (HLB 10.2) at ratios such that the surfactant system HLB is 9.2.

The reaction mass separates into phases during polymerization.

### Example 11

Example 10 is repeated, but in this case the surfactant system is constituted of 22.5 g (15% by weight of the total weight of the microemulsion) of a mixture of an ethoxylated oleic alcohol (HLB 4.9) and polyethylene glycol 400 dilaurate (HLB 10.2) at ratios such that the surfactant system HLB is 8.9.

The reaction mass separates into phases during polymerization.

### Example 12

Example 8 is repeated, but polymerization is initiated at 35°C.

The reaction mass separates into phases during polymerization.

### Example 13

An aqueous phase is prepared in a lined reactor by adding 13.996 g of demineralized water, 13.585 g of acrylic acid, and 7.626 g of sodium hydroxide pellets to 52.74 g of a 50% by weight acrylamide aqueous solution. The addition of sodium hydroxide is carried out in conditions such that the solution temperature at no time exceeds 35°C. Then, 0.442 g of ammonium persulfate and 0.152 g of ethylenediaminetetraacetic acid disodium salt are added with stirring. The pH is measured and if it is outside of the 7.3-7.5 interval, it is adjusted to said interval by adding either sodium hydroxide or acrylic acid. This aqueous phase is deoxygenated by bubbling nitrogen for 15 minutes. The monomer ratio is such that after polymerization, the copolymer ionic charge is 40%.

An oily phase is prepared in another deposit by adding 23.85 g of a surfactant system of HLB 9.36, formed by 8.87 g of sorbitol hexalaurate with 7 moles of ethylene oxide (HLB 4.9) and 14.98 g of sorbitol hexalaurate with 39 moles of ethylene oxide (HLB 12), to 37.129 g of a paraffin oil formed by a mixture of n-decane and tetradecane at a 40:60 mass ratio. This oily phase is deoxygenated by bubbling nitrogen for 15 minutes.

The oily phase is slowly added to the aqueous phase in nitrogen atmosphere and with stirring. The mixture is deoxygenated again by bubbling nitrogen for 15 minutes. A completely transparent microemulsion is formed. Its temperature is adjusted to 35°C.

Polymerization is initiated by adding a sodium disulfite aqueous solution (45 g/l) with a flow rate of 88.88 ml/h/kg of aqueous phase. Polymerization begins almost instantly, and the reaction mass separates into phases during polymerization.

### Example 14

The experiment from example 13 is repeated, but a mixture of xylitol pentalaurate with 9 moles of ethylene oxide (HLB 4.9) and xylitol pentalaurate with 33 moles of ethylene oxide (HLB 12) is used as a surfactant.

The reaction mass separates into phases during polymerization.

Examples 1 to 14 show that the use of a surfactant system wherein at least one of the main constituents has a hydrophobic chain with fewer than 13 carbon atoms does not permit obtaining stable microemulsions after polymerizing, regardless of whether the number of hydrophobic chains per surfactant molecule is one or several.

### Example 15

An aqueous phase is prepared in a lined reactor by adding 13.996 g of demineralized water, 13.585 g of acrylic acid, and 7.626 g of sodium hydroxide pellets to 52.74 g of a 50% by weight acrylamide aqueous solution. The addition of sodium hydroxide is carried out in conditions such that the solution temperature at no time exceeds 35°C. Then, 0.442 g of ammonium persulfate and 0.152 g of ethylenediaminetetraacetic acid disodium salt are added with stirring. The pH is measured and if it is outside of the 7.3-7.5 interval, it is adjusted to said interval by adding either sodium hydroxide or acrylic acid. This aqueous phase is deoxygenated by bubbling nitrogen for 15 minutes. The monomer ratio is such that after polymerization, the copolymer ionic charge is 40%.

An oily phase is prepared in another deposit by adding 19.982 g of a surfactant system of HLB 9.6, formed by 5.406 g of an ethoxylated oleic alcohol of HLB 4.9, 12.579 g of an ethoxylated ricinoleic alcohol of HLB 11 and 1.997 g of a linear secondary fatty alcohol with 13 carbon atoms in its hydrophobic chain (HLB 13.3), to 41.479 g of a paraffin oil formed by a mixture of n-decane and tetradecane at a 40:60 mass ratio. This oily phase is deoxygenated by bubbling nitrogen for 15 minutes.

The oily phase is slowly added to the aqueous phase in nitrogen atmosphere and by stirring. The mixture is deoxygenated again by bubbling nitrogen for 15 minutes. A completely transparent microemulsion is formed. Its temperature is adjusted to 30°C.

Polymerization is initiated by adding a sodium disulfite aqueous solution (45 g/l) with a flow rate of 88.88 ml/h/kg of aqueous phase. Polymerization begins almost instantly, and the temperature increases to 90-92°C in less than one minute during polymerization. Polymerization is considered to be concluded when the temperature returns to its initial value. A microemulsion flocculant is obtained with a 30% by weight active substance content.

The microemulsion is translucent, stable and easily used as a carrier. When 4 g thereof is added to 250 g of water while stirring, the reversal occurs in less than 1 hour, as is seen by monitoring the solution viscosity increase according to time.

### Example 16

Example 15 is repeated, but polymerization is initiated at 35°C. The microemulsion obtained after polymerization is translucent, stable and easily used as a carrier. When 4 g thereof is added to 250 g of water while stirring, the reversal occurs in less than 1 hour, as is seen by monitoring the solution viscosity increase according to time.

### Example 17

Example 15 is repeated, but polymerization is initiated at 25°C. The microemulsion obtained after polymerization is translucent, stable and easily used as a carrier. When 4 g thereof is added to 250 g of water while stirring, the reversal occurs in less than 1 hour, as is seen by monitoring the solution viscosity increase according to time.

### Example 18

Example 15 is repeated, but the surfactant ratios are adjusted so that the surfactant mixture HLB is 8.9. Polymerization is initiated at 35°C. The microemulsion obtained after polymerization is translucent, stable and easily used as a carrier. When 4 g thereof is added to 250 g of water while stirring, the reversal occurs in less than 1 hour, as is seen by monitoring the solution viscosity increase according to time.

### Example 19

Example 15 is repeated, except that polymerization is initiated at 35°C, and the oily phase is constituted of a surfactant system mixture of HLB 9.36 formed by a mixture of 8.87 g of xylitol pentaoleate with 9 moles of ethylene oxide (HLB 4.9) and 14.98 g of xylitol pentaoleate with 47 moles of ethylene oxide (HLB 12), and 37.129 g of a paraffin oil having an n-decane and tetradecane mixture at a 40:60 mass ratio. The surfactant system concentration is 15.9% by weight with regard to the total weight of the microemulsion.

The microemulsion obtained after polymerization is translucent, stable and easily used as a carrier.

### Example 20

The experiment from example 15 is repeated, except that polymerization is initiated at 35°C, and the surfactant system has a mixture of sorbitol pentastearate with 9 moles of ethylene oxide (HLB 4.9) and sorbitol pentastearate with 47 moles of ethylene oxide (HLB 12), at a ratio such that the HLB of the mixture is 9.2.

The maximum temperature reached during polymerization is 92°C, and polymerization is considered to be concluded when the temperature decreases to the initial temperature. A stable microemulsion is obtained which, after sitting overnight, separates into phases.

### Example 21

Example 20 is repeated with the exception that the surfactant system has a mixture of sorbitol hexastearate with 11 moles of ethylene oxide (HLB 4.9) and sorbitol hexastearate with 56 moles of ethylene oxide (HLB 12), at a ratio such that the HLB of the mixture is 9.2.

The maximum temperature reached during polymerization is 64°C, and polymerization is considered to be concluded when the temperature decreases to the initial temperature. A stable microemulsion is obtained which, after sitting overnight, separates into phases.

Examples 20 and 21 show that stable anionic and nonionic flocculant microemulsions cannot be obtained either after polymerization by using surfactants with a high number of carbon atoms (18) in their hydrophobic chain or in each one of their hydrophobic chains. For this it is necessary that there is at least one double bond in the surfactant hydrophobic chain or chains, as seen through examples 15 to 19.

The following examples show that polymerization can be carried out using exclusively sodium disulfite as an initiator.

### Example 22

An aqueous phase is prepared in a lined reactor by adding 14.516 g of demineralized water, 13.739 g of acrylic acid, and 7.545 g of sodium hydroxide pellets to 54 g of a 50% by weight acrylamide aqueous solution. The addition of sodium hydroxide is carried out in conditions such that the solution temperature at no time exceeds 35°C. Then, 0.150 g of ethylenediaminetetraacetic acid disodium salt are added with stirring. The pH is measured and if it is outside of the 7.3-7.5 interval, it is adjusted to said interval by adding either sodium hydroxide or acrylic acid.

An oily phase is prepared in another deposit by adding 19.492 g of a surfactant system of HLB 9.2, formed by 5.746 g of an ethoxylated oleic alcohol of HLB 4.9 and 13.746 g of an ethoxylated ricinoleic alcohol of HLB 11, to 40.500 g of a paraffin oil formed by an n-decane and tetradecane mixture at a 40:60 mass ratio.

Both phases are mixed and deoxygenated by bubbling nitrogen for 15 minutes.

Polymerization is initiated at 35°C by adding a sodium disulfite aqueous solution (5 g/l) with a flow rate of 88.89 ml/h/kg of aqueous phase. Polymerization begins a few seconds later, and the temperature increases to 79°C during polymerization. Polymerization is considered to be concluded when the temperature returns to its initial value. A microemulsion flocculant is obtained with a 30% by weight active substance content.

The microemulsion is translucent, stable and easily used as a carrier.

### Example 23

Polymerization was repeated in the same conditions as in example 22, except that the sodium disulfite aqueous solution concentration was 3 g/l. The temperature increased to 77.5°C. The microemulsion was translucent, stable and easily used as a carrier.

### Example 24

Polymerization was repeated in the same conditions as in example 22, except that the sodium disulfite aqueous solution concentration was 1 g/l. The temperature increased to 66.4°C. The microemulsion was translucent, stable and easily used as a carrier.

### Example 25

Polymerization was repeated in the same conditions as in example 22, except that the sodium disulfite aqueous solution concentration was 0.5 g/l. The temperature increased to 61°C. The microemulsion was translucent, stable and easily used as a carrier.

### Example 26

Polymerization was repeated in the same conditions as in example 22, except that the sodium disulfite aqueous solution concentration was 0.1 g/l. The temperature increased to 53°C. The microemulsion was translucent, stable and easily used as a carrier.

### Example 27

Polymerization was repeated in the same conditions as in example 22, except that the sodium disulfite aqueous solution concentration was 0.25 g/l. The temperature increased to 53°C. The microemulsion was translucent, stable and easily used as a carrier.

### Example 28

Polymerization was repeated in the same conditions as in example 25, except that the initial polymerization temperature was 30°C. The temperature increased to 58°C. The microemulsion was translucent, stable and easily used as a carrier.

### Example 29

Polymerization was repeated in the same conditions as in example 25, except that the initial polymerization temperature was 25°C. The temperature increased to 52°C. The microemulsion was translucent, stable and easily used as a carrier.

### Example 30

Polymerization was repeated in the same conditions as in example 25, except that the initial polymerization temperature was 20°C. The temperature increased to 47°C. The microemulsion was translucent, stable and easily used as a carrier.

### Example 31

Polymerization was repeated in the same conditions as in example 25, except that the initial polymerization temperature was 15°C. The temperature increased to 56.5°C. The microemulsion was translucent, stable and easily used as a carrier.

### Example 32 (Comparative)

In this example, the yields of the microemulsions obtained according to examples 22 to 31 of the present invention are compared as dehydration agents with two commercial emulsion dehydration agents: Superfloc A-1883 and Superfloc A-1820, from Cytec Technology Corp., Wilmington, DE, both with a 40% anionic charge and of the same active substance content as the microemulsions of this invention tested in this example.

The tests were carried out by previously reversing in water the microemulsions of this invention as well as said commercial emulsions to give a concentration of 2 g/l of emulsion or microemulsion. Then, and as from this solution, different doses were added of the solution reversed to sludge used to determine the optimal dose of each product as a flocculant.

The microemulsions of examples 22 to 26 of this invention were assessed with a sludge from a drinking water purifying plant physical-chemical treatment by means of the CST (Capillary Suction Time) method, with a 10-second stirring time. The concentration of solids of the sludge was 10 g/l. The yield of the microemulsions of examples 23 to 26 of this invention was similar and equal to that of the Superfloc A-1883 emulsion, the optimal dose of emulsion or microemulsion being 100 ppm, and much better than that of Superfloc A-1820 emulsion, whose optimal dose was 140 ppm. The yield of the microemulsion from example 22 of this invention (optimal dose 120 ppm) was lower than that of the Superfloc A-1883 emulsion and higher than that of the Superfloc A-1820 emulsion.

The microemulsions from examples 27 to 31 of this invention were assessed with a sludge from a residual industrial water purifying plant physical-chemical treatment by means of the same aforementioned criteria. The solid concentration of the sludge was 50 g/l. The yield of the microemulsions of this invention was similar and equal to that of the Superfloc A-1883 emulsion, the optimal dose of emulsion or microemulsion being 80 ppm, and much higher than that of the Superfloc A-1820 emulsion, whose optimal dose was 120 ppm. Furthermore, the quality of the ball formed by the microemulsions of this invention and the Superfloc A-1883 product, measured as ball size and consistency, was much better than that of the Superfloc A-1820 product.

## Claims

1. A method of producing reverse microemulsions from acrylamide polymers or from acrylamide and (meth)acrylic acid copolymers or a salt thereof, of high molecular weight, comprising the following steps:
a) preparing an aqueous phase, said aqueous phase comprising:
a.1) water;
a.2) a monomer to be polymerized selected from acrylamide and a mixture of monomers comprising, at least, acrylamide and, at least, (meth)acrylic acid or a salt thereof, in a total monomer concentration comprised between 20% and 40% by weight with regard to the total weight of the microemulsion, and an acrylamide to (meth) acrylic acid or a salt thereof mass ratio comprised between 100:0 and 40:60;
a.3) optionally, a metal chelating agent; and
a.4) optionally, a polymerization initiator;
by means of the mixture of components a.1), a.2) and, optionally, a.3) and/or a.4);
b) separately preparing an oily phase, said oily phase comprising:
b.1) a surfactant system whose HLB is comprised between 8 and 10, wherein said surfactant system comprises (i) at least two nonionic surfactants "A", one of which has an HLB comprised between 3 and 8, and the other one has an HLB comprised between 9.5 and 14, preferably between 9.8 and 11.5; each one of said nonionic surfactants comprising, at least, one hydrophobic chain containing more than 16 carbon atoms and, at least, one double bond; and (ii) at least one nonionic surfactant "B" with saturated hydrophobic chain or chains with an HLB equal to or grater than 12, preferably equal to or greater than 13; and
b.2) an organic solvent;
by means of the mixture of components b.1) and b.2);
c) degasifying said aqueous and oily phases, together or separately, with an inert gas until the oxygen concentration therein is lower than 0.5 ppm;
d) mixing said aqueous and oily phases in inert atmosphere in case said aqueous and oily phases have been degasified separately; and
e) polymerizing said aqueous and oily phase mixture in inert atmosphere.

2. A method according to claim 1, wherein said surfactant system has an HLB comprised between 9.2 and 9.6.

3. A method according to claim 1, wherein said surfactant system is at a concentration comprised between 8% and 20% by weight, preferably between 10% and 15% by weight, with regard to the total weight of the microemulsion.

4. A method according to claim 1, wherein said nonionic surfactant "B" is of the ethoxylated fatty alcohol type of HLB comprised between 13 and 18.

5. A method according to claim 1, wherein said nonionic surfactant "B" with saturated hydrophobic chain or chains with an HLB equal to or greater than 12 is a polyethoxylated nonionic surfactant with a number of carbon atoms in its hydrophobic chain or in each one of its hydrophobic chains comprised between 11 and 14 carbon atoms.

6. A method according to any of claims 1-5, wherein said nonionic surfactant "B" with saturated hydrophobic chain or chains with an HLB equal to or higher than 12 is at a by weight concentration with regard to the total weight of the surfactant system comprised between 2% and 20%, preferably between 8% and 15%.

7. A method according to claim 1, wherein said surfactant system also comprises an anionic surfactant.

8. A method according to claim 6, wherein said anionic surfactant is at a concentration comprised between 0.1% and 10% by weight, preferably between 0.1% and 2% by weight, with regard to the total weight of the surfactant system.

9. A method according to claim 1, wherein said organic solvent is selected from an aliphatic hydrocarbon, an aromatic hydrocarbon and a mixture of aromatic and/or aliphatic hydrocarbons, each one of the compounds constituting the organic solvent having a number of carbon atoms comprised between 6 and 18, preferably between 10 and 14.

10. A method according to claim 1, wherein said inert gas is nitrogen.

11. A method according to claim 1, wherein the aqueous phase pH is comprised between 6 and 8, preferably between 7.3 and 7.5.

12. A method according to claim 1, wherein the initial polymerization temperature is comprised between 10°C and 40°C, preferably between 20°C and 30°C.

13. A method according to claim 1, wherein said polymerization initiator is selected from a redox pair and thermal initiator.

14. A method according to claim 12, wherein said polymerization initiator is selected from sodium disulfite, 2,2'-azobisisobutyronitrile (AIBN), 2,2'-azobis(2-aminopropane) dihydrochloride (V-50), tert-butyl peroxide, sodium persulfate and the ammonium ferrous sulfate/ammonium persulfate and sodium disulfite/ammonium persulfate redox pairs.

15. A method according to claim 1, wherein said aqueous phase does not contain a polymerization initiator (a.4), and polymerization is initiated by adding sodium disulfite in aqueous solution form to the degasified microemulsion for polymerizing the monomers.

16. A method according to claim 14, wherein said sodium disulfite aqueous solution is added continuously to the degasified microemulsion for polymerizing the monomers, and the sodium disulfite concentration in said aqueous solution is comprised between 0.10 and 400 g/l, preferably between 0.25 and 5g/l, and more preferably between 0.5 and 3 g/l.

17. A method according to claim 1, comprising the following steps:
a) preparing an aqueous phase, said aqueous phase comprising:
a.1) water;
a.2) a monomer to be polymerized selected from acrylamide and a mixture of acrylamide and (meth)acrylic acid or a salt thereof, at a total monomer concentration comprised between 20% and 40% by weight with regard to the total weight of the microemulsion, and at an acrylamide to (meth)acrylic acid or salts thereof mass ratio comprised between 100:0 and 40:60;
a.3) optionally, a metal chelating agent; and
a.4) optionally, an oxidizing agent component of a redox pair free radical polymerization initiator;
by means of the mixture of components a.1), a.2), and, optionally, a.3) and/or a.4);
b) separately preparing an oily phase, said oily phase comprising:
b.1) a surfactant system whose HLB is comprised between 8 and 10, wherein said surfactant system comprises (i) at least two nonionic surfactants "A", one of which has an HLB comprised between 3 and 8, and the other one has an HLB comprised between 9.5 and 14, preferably between 9.8 and 11.5; each one of said nonionic surfactants comprising, at least, one hydrophobic chain containing more than 16 carbon atoms and, at least, one double bond; and (ii) at least one nonionic surfactant "B" with saturated hydrophobic chain or chains with an HLB equal to or greater than 12, preferably equal to or greater than 13; and
b.2) an organic solvent;
by means of the mixture of components b.1) and b.2);
c) degasifying said aqueous and oily phases, together or separately, with an inert gas until the oxygen concentration therein is lower than 0.5 ppm;
d) mixing said aqueous and oily phases in inert atmosphere in case said aqueous and oily phases have been degasified separately; and
e) polymerizing said aqueous and oily phase mixture, in inert atmosphere, by means of adding sodium disulfite, in case that said aqueous phase did not contain said oxidizing agent component of a redox pair free radical polymerization initiator (a.4), at a temperature comprised between 10°C and 40°C, preferably between 25°C and 35°C; or alternately
e') polymerizing said aqueous and oily phase mixture, in inert atmosphere, by adding a reducer agent capable of reducing said oxidizing agent component of a redox pair free radical polymerization initiator (a.4) present in said aqueous phase, at a temperature comprised between 10°C and 40°C, preferably between 25°C and 35°C

18. An acrylamide polymer or a copolymer of acrylamide and (meth)acrylic acid, or a salt thereof, in microemulsion, obtainable according to the method of any one of claims 1 to 17.

## Patentansprüche

1. Verfahren zur Gewinnung von inversen Mikroemulsionen aus hochmolekularen Acrylamidpolymere oder Acrylamid-(Meth)acrylsäure-Copolymere oder einem deren Salze, das die folgenden Schritte umfasst:
a) Vorbereitung einer wässrigen Phase, wobei die besagte wässrige Phase umfasst:
a.1) Wasser;
a.2) ein zu polymerisierendes Monomer, das unter Acrylamid und einer Monomermischung, die zumindest Acrylamid und zumindest (Meth)acrylsäure oder eines deren Salzen umfasst, in einer Gesamtmonomerkonzentration zwischen 20 Gew.-% und 40 Gew.-% bezogen auf das Gesamtgewicht der Mikroemulsion liegt, und in einem Gewichtsverhältnis des Acrylamids zur (Meth)acrylsäure oder einem deren Salzen zwischen 100:0 und 40:60 liegt, ausgewählt ist;
a.3) gegebenenfalls, einen Metallchelatbildner; und
a.4) gegebenenfalls, einen Polymerisationsinitiator;
durch die Mischung der Komponenten a.1), a.2), und, gegebenenfalls, a.3) und/oder a.4);
b) getrennte Vorbereitung einer öligen Phase, wobei die besagte ölige Phase umfasst:
b.1) ein oberflächenaktives System, dessen HLB-Wert zwischen 8 und 10 liegt, wobei das besagte oberflächenaktive System (i) zumindest zwei nichtionischen Tenside "A" umfasst, von denen eines einen HLB-Wert zwischen 3 und 8 aufweist und das andere einen HLB-Wert zwischen 9,5 und 14, vorzugsweise zwischen 9,8 und 11,5 aufweist; wobei jedes der besagten nichtionischen Tenside zumindest eine hydrophobe Kette mit mehr als 16 Kohlenstoffatomen und zumindest eine Doppelbindung aufweist; und (ii) zumindest ein mit gesättigten hydrophoben Kette oder Ketten, nichtionisches Tensid "B" mit einem HLB-Wert, der gleich oder höher als 12, vorzugsweise gleich oder höher als 13 ist, umfasst; und
b.2) ein organisches Lösungsmittel;
durch die Mischung der Komponenten b.1) und b.2);
c) Gesamte oder individuelle Entgasung der besagten wässrigen und öligen Phasen mit einem Inertgas bis die Sauerstoffkonzentration in diesen Phasen geringer als 0,5 ppm ist;
d) Mischung der besagten wässrigen und öligen Phasen, wenn sie getrennt entgasen wurden, in einer inerten Atmosphäre; und
e) Polymerisation der besagten Mischung der wässrigen und öligen Phasen in einer inerten Atmosphäre.

2. Verfahren nach Anspruch 1, bei dem das oberflächenaktive System einen HLB-Wert hat, der zwischen 9,2 und 9,6 liegt.

3. Verfahren nach Anspruch 1, bei dem das besagte oberflächenaktive System in einer Konzentration liegt, die bezogen auf das Gesamtgewicht der Mikroemulsion zwischen 8 Gew.-% und 20 Gew.-%, vorzugsweise zwischen 10 Gew.-% und 15 Gew.-% liegt.

4. Verfahren nach Anspruch 3, bei dem das besagte nichtionische Tensid "B" eine Art ethoxilierter Fettalkohol ist, dessen HLB-Wert zwischen 13 und 18 liegt.

5. Verfahren nach Anspruch 1, bei dem das besagte mit gesättigten hydrophoben Kette oder Ketten und einem gleichen oder höheren als 12 HLB-Wert nichtionische Tensid "B" ein polyethoxiliertes nichtionisches Tensid ist, wobei die Anzahl an Kohlenstoffatomen in seiner hydrophoben Kette oder in jeder seiner hydrophoben Ketten zwischen 11 und 14 Kohlenstoffatomen liegt.

6. Verfahren nach irgendeiner der Ansprüche 1 bis 5, bei dem das besagte mit gesättigten hydrophoben Kette oder Ketten und einem gleichen oder höheren als 12 HLB-Wert nichtionische Tensid "B" in einer Konzentration liegt, die bezogen auf das Gesamtgewicht des oberflächenaktiven Systems zwischen 2 Gew.-% und 20 Gew.-%, vorzugsweise zwischen 8 Gew.-% und 15 Gew.-% liegt.

7. Verfahren nach Anspruch 1, bei dem das besagte oberflächenaktive System weiterhin ein anionisches Tensid umfasst.

8. Verfahren nach Anspruch 6, bei dem das besagte anionische Tensid in einer Konzentration liegt, die bezogen auf das Gesamtgewicht des oberflächenaktiven Systems zwischen 0,1 Gew.-% und 10 Gew.-%, vorzugsweise zwischen 0,1 Gew.-% und 2 Gew.-% liegt.

9. Verfahren nach Anspruch 1, bei dem das besagte organische Lösungsmittel unter einem aliphatischen Kohlenwasserstoff, einem aromatischen Kohlenwasserstoff und einer Mischung aus aromatischen und/oder aliphatischen Kohlenwasserstoffe ausgewählt ist, wobei jede der das organische Lösungsmittel bildende Komponente eine Anzahl an Kohlenstoffatomen aufweist, die zwischen 6 und 18, vorzugsweise zwischen 10 und 14, liegt.

10. Verfahren nach Anspruch 1, bei dem das besagte Inertgas Stickstoff ist.

11. Verfahren nach Anspruch 1, bei dem der pH-Wert der wässrigen Phase zwischen 6 und 8, vorzugsweise zwischen 7,3 und 7,5 liegt.

12. Verfahren nach Anspruch 1, bei dem die Auslösungstemperatur der Polymerisation zwischen 10°C und 40°C, vorzugsweise zwischen 20°C und 30°C liegt.

13. Verfahren nach Anspruch 1, bei dem der besagte Polymerisationsinitiator unter einem thermischen Initiator oder einem Redoxpaar ausgewählt ist.

14. Verfahren nach Anspruch 12, bei dem der besagte Polymerisationsinitiator unter Natriumdisulfit, 2,2'-Azobisisobutyronitril (AIBN), 2,2'-Azobis(2-aminopropan)dihydrochlorid (V-50), tert-Butylperoxid, Natriumpersulfat, und die Redoxpaare Ammoniumeisen(II)-sulfat/Ammoniumpersulfat und Natriumdisulfit/Ammoniumpersulfat ausgewählt ist.

15. Verfahren nach Anspruch 1, bei dem die besagte wässrige Phase keinen Polymerisationsinitiator (a.4) enthält, und die Polymerisation durch Zusatz von Natriumdisulfit in Form einer wässrigen Lösung zu der zur Monomerpolymerisation entgasten Mikroemulsion ausgelöst wird.

16. Verfahren nach Anspruch 14, bei dem die besagte wässrige Natriumdisulfitlösung zu der zur Monomerpolymerisation entgasten Mikroemulsion kontinuierlich zugesetzt wird und die Natriumdisulfitkonzentration in der besagten wässrigen Lösung zwischen 0,1 und 400 g/l, vorzugsweise zwischen 0,25 und 5 g/l, und besonders bevorzugt zwischen 0,5 und 3 g/l liegt.

17. Verfahren nach Anspruch 1, das die folgenden Schritte umfasst:
a) Vorbereitung einer wässrigen Phase, wobei die besagte wässrige Phase umfasst:
a.1) Wasser;
a.2) ein zu polymerisierendes Monomer, das unter Acrylamid und einer Monomermischung, die zumindest Acrylamid und zumindest (Meth)acrylsäure oder eines deren Salzen umfasst, in einer Gesamtmonomerkonzentration zwischen 20 Gew.-% und 40 Gew.-% bezogen auf das Gesamtgewicht der Mikroemulsion liegt, und in einem Gewichtsverhältnis des Acrylamids zur (Meth)acrylsäure oder einem deren Salzen zwischen 100:0 und 40:60 liegt, ausgewählt ist;
a.3) gegebenenfalls, einen Metallchelatbildner; und
a.4) gegebenenfalls, ein Oxidationsmittel, das Bestandteil eines als Initiator der freie radikalische Polymerisation wirkenden Redoxpaares ist;
durch die Mischung der Komponenten a.1), a.2), und, gegebenenfalls, a.3) und/oder a.4);
b) getrennte Vorbereitung einer öligen Phase, wobei die besagte ölige Phase umfasst:
b.1) ein oberflächenaktives System, dessen HLB-Wert zwischen 8 und 10 liegt, wobei das besagte oberflächenaktive System (i) zumindest zwei nichtionischen Tenside "A" umfasst, wobei von denen eines einen HLB-Wert zwischen 3 und 8 aufweist und das andere einen HLB-Wert zwischen 9,5 und 14, vorzugsweise zwischen 9,8 und 11,5 aufweist; wobei jedes der besagten nichtionischen Tenside zumindest eine hydrophobe Kette mit mehr als 16 Kohlenstoffatomen und zumindest eine Doppelbindung aufweist; und (ii) zumindest ein mit gesättigten hydrophoben Kette oder Ketten, nichtionisches Tensid "B" mit einem HLB-Wert, der gleich oder höher als 12, vorzugsweise gleich oder höher als 13 ist, umfasst; und
b.2) ein organisches Lösungsmittel;
durch die Mischung der Komponenten b.1) und b.2);
c) Gesamte oder individuelle Entgasung der besagten wässrigen und öligen Phasen mit einem Inertgas bis die Sauerstoffkonzentration in diesen Phasen geringer als 0,5 ppm ist;
d) Mischung der besagten wässrigen und öligen Phasen, wenn sie getrennt entgasen wurden, in einer inerten Atmosphäre; und
e) Polymerisation der besagten Mischung der wässrigen und öligen Phasen in einer inerten Atmosphäre durch Zusatz von Natriumdisulfit, wenn die besagte ölige Phase das besagte Oxidationsmittel, das Bestandteil eines als Initiator der freie radikalische Polymerisation wirkenden Redoxpaares (a.4) ist, nicht enthält, bei einer Temperatur, die zwischen 10°C und 40°C, vorzugsweise zwischen 25°C und 35°C liegt; oder alternativ
e') Polymerisation der besagten Mischung aus wässrigen und öligen Phasen in einer inerten Atmosphäre durch Zusatz eines Reduktionsmittels, das fähig ist, das besagte in der besagten wässrigen Phase vorhandenen Oxidationsmittel, das Bestandteil eines als Initiator der freie radikalische Polymerisation wirkenden Redoxpaares (a.4) ist, zu reduzieren, bei einer Temperatur zwischen 10°C und 40°C, vorzugsweise zwischen 25°C und 35°C.

18. Acrylamidpolymer oder Acrylamid-(MEth)acrylsäureCopolymer oder eines deren Salzen in Mikroemulsion, der nach dem Verfahren nach irgendeiner der Ansprüche 1 bis 17 erhältlich ist.

## Revendications

1. Procédé pour l'obtention de microémulsions inverses de polymères d'acrylamide ou de copolymères d'acrylamide et d'acide (méth)acrylique ou l'un de ses sels, de poids moléculaire élevé, comprenant les étapes suivantes :
a) Préparer une phase aqueuse, comprenant ladite phase aqueuse:
a.1) de l'eau;
a.2) un monomère à polymériser choisi parmi l'acrylamide et un mélange de monomères comprenant, au moins, de l'acrylamide et au moins, de l'acide (méth)acrylique ou l'un de ses sels, à une concentration totale de monomère comprise entre 20% et 40% en poids par rapport au poids total de la microémulsion et dans un rapport en poids d'acrylamide à l'acide (méth)acrylique ou l'un de ses sels compris entre 100:0 et 40:60;
a.3) optionnellement un chélateur de métaux; et
a.4) optionnellement, un initiateur de la polymérisation;
grâce au mélange des composants a.1), a.2), et, optionnellement, a.3) et/ou a.4);
b) Préparer, séparément, une phase huileuse, comprenant ladite phase huileuse :
b.1) un système tensioactif dont la valeur de HLB est comprise entre 8 et 10, dans lequel ledit système tensioactif comprend (i) au moins, deux tensioactifs non ioniques "A", dont l'un d'eux a une valeur de HLB comprise entre 3 et 8 et dont l'autre a une valeur de HLB comprise entre 9,5 et 14, préférablement entre 9,8 et 11,5 ; comprenant chacun desdits tensioactifs non ioniques, au moins, une chaîne hydrophobe contenant plus de 16 atomes de carbone et, au moins, une double liaison ; et (ii) au moins, un tensioactif non ionique "B" à chaîne ou chaînes hydrophobes saturées, avec une valeur de HLB égale ou supérieure à 12, préférablement égale ou supérieure à 13; et
b.2) un dissolvant organique;
grâce au mélange des composants b.1) et b.2);
c) Dégazer lesdites phases aqueuse et huileuse, ensembles ou séparément, avec un gaz inerte jusqu'à ce que la concentration d'oxygène dans les mêmes soit inférieure à 0,5 ppm;
d) Mélanger lesdites phases aqueuse et huileuse, dans le cas où elles sont dégazées séparément, en atmosphère inerte; et
e) Polymériser ledit mélange des phases aqueuse et huileuse, en atmosphère inerte.

2. Procédé selon la revendication 1, dans lequel ledit système tensioactif a une valeur de HLB comprise entre 9,2 et 9,6.

3. Procédé selon la revendication 1, dans lequel ledit système tensioactif est à une concentration comprise entre 8% et 20% en poids, préférablement entre 10% et 15% en poids, par rapport au poids total de la microémulsion.

4. Procédé selon la revendication 3, dans lequel ledit tensioactif non ionique "B" est du type alcool gras éthoxylé avec une valeur de HLB comprise entre 13 et 18.

5. Procédé selon la revendication 1, dans lequel ledit tensioactif non ionique "B" à chaîne ou chaînes hydrophobes saturées, avec une valeur de HLB égale ou supérieure à 12 est un tensioactif non ionique polyéthoxylé, avec un nombre d'atomes de carbone dans sa chaîne hydrophobe ou dans chacune des chaînes hydrophobes compris entre 11 et 14 atomes de carbone.

6. Procédé selon n'importe laquelle des revendications 1 à 5, dans lequel ledit tensioactif non ionique "B" à chaîne ou chaînes hydrophobes saturées, avec une valeur de HLB égale ou supérieure à 12 se trouve à une concentration en poids par rapport au poids total du système tensioactif comprise entre 2% et 20%, préférablement entre 8% et 15%.

7. Procédé selon la revendication 1, dans lequel ledit système tensioactif comprend, en outre, un tensioactif anionique.

8. Procédé selon la revendication 6, dans lequel ledit tensioactif anionique se trouve à une concentration en poids para rapport au poids total du système tensioactif comprise entre 0,1% et 10%, préférablement entre 0,1% et 2%.

9. Procédé selon la revendication 1, dans lequel ledit dissolvant organique est choisi parmi un hydrocarbure aliphatique, un hydrocarbure aromatique et un mélange d'hydrocarbures aromatiques et/ou aliphatiques, ayant chaque composant constituant le dissolvant organique un nombre d'atomes de carbone compris entre 6 et 18, préférablement entre 10 et 14.

10. Procédé selon la revendication 1, dans lequel ledit gaz inerte est du nitrogène.

11. Procédé selon la revendication 1, dans lequel la valeur du pH de la phase aqueuse est comprise entre 6 et 8, préférablement entre 7,3 et 7,5.

12. Procédé selon la revendication 1, dans lequel la température d'initiation de la polymérisation est comprise entre 10°C et 40°C, préférablement entre 20°C et 30°C.

13. Procédé selon la revendication 1, dans lequel ledit initiateur de la polymérisation est choisi parmi un initiateur thermique et un couple redox.

14. Procédé selon la revendication 12, dans lequel ledit initiateur de la polymérisation est choisi parmi disulfite de sodium, 2,2'-azobisisobutyronitrile (AIBN), dichlorhydrate de 2,2'-azobis(2-aminopropane) (V-50), peroxyde de tert-butyle, et les couples redox, sulfate ferreux d'ammonium/persulfate d'ammonium et disulfite de sodium/persulfate d'ammonium.

15. Procédé selon la revendication 1, dans lequel ladite phase aqueuse ne contient pas d'initiateur de la polymérisation (a.4), et la polymérisation commence grâce à l'addition de disulfite de sodium, sous forme de dissolution aqueuse, sur la microémulsion dégazée pour polymériser les monomères.

16. Procédé selon la revendication 14, dans lequel la dissolution aqueuse de disulfite de sodium est additionnée en continu sur la microémulsion dégazée pour polymériser les monomères et la concentration du disulfite de sodium dans ladite dissolution est comprise entre 0,10 et 400 g/l, préférablement entre 0,25 et 5 g/l, et plus préférablement entre 0,5 et 3 g/l.

17. Procédé selon la revendication 1, comprenant les étapes suivantes :
a) Préparer une phase aqueuse, comprenant ladite phase aqueuse:
a.1) de l'eau;
a.2) un monomère à polymériser choisi parmi l'acrylamide et un mélange d'acrylamide et d'acide (méth)acrylique ou l'un de ses sels, à une concentration totale de monomère comprise entre 20% et 40% en poids par rapport au poids total de la microémulsion et dans un rapport en poids d'acrylamide à l'acide (méth)acrylique ou l'un de ses sels compris entre 100:0 et 40:60;
a.3) optionnellement un chélateur de métaux; et
a.4) optionnellement, un agent oxydant membre d'un couple redox initiateur de la polymérisation par radicaux libres;
grâce au mélange des composants a.1), a.2), et, optionnellement, a.3) et/ou a.4);
b) Préparer, séparément, une phase huileuse ou organique, comprenant ladite phase huileuse :
b.1) un système tensioactif dont la valeur de HLB est comprise entre 8 et 10, dans lequel ledit système tensioactif comprend (i) au moins, deux tensioactifs non ioniques "A", dont l'un d'eux a une valeur de HLB comprise entre 3 et 8 et dont l'autre a une valeur de HLB comprise entre 9,5 et 14, préférablement entre 9,8 et 11,5 ; comprenant chacun desdits tensioactifs non ioniques, au moins, une chaîne hydrophobe contenant plus de 16 atomes de carbone et, au moins, une double liaison ; et (ii) au moins, un tensioactif non ionique "B" à chaîne ou chaînes hydrophobes saturées, avec une valeur de HLB égale ou supérieure à 12, préférablement égale ou supérieure à 13; et
b.2) un dissolvant organique;
grâce au mélange des composants b.1) et b.2);
c) Dégazer lesdites phases aqueuse et huileuse, ensembles ou séparément, avec un gaz inerte jusqu'à ce que la concentration d'oxygène dans les mêmes soit inférieure à 0,5 ppm;
d) Mélanger lesdites phases aqueuse et huileuse, dans le cas où elles sont dégazées séparément, en atmosphère inerte; et
e) Polymériser ledit mélange des phases aqueuse et huileuse, en atmosphère inerte, par addition de disulfite de sodium, dans le cas où ladite phase aqueuse ne contient pas ledit agent oxidant membre d'un couple redox initiateur de la polymérisation par radicaux libres (a.4), à une température comprise entre 10°C et 40°C, préférablement entre 25°C et 35°C ; ou alternativement
e') Polymériser ledit mélange des phases aqueuse et huileuse, en atmosphère inerte, par addition d'un agent réducteur capable de réduire ledit agent oxydant membre d'un couple redox initiateur de la polymérisation par radicaux libres (a.4) présent dans ladite phase aqueuse, à une température comprise entre 10°C et 40°C, préférablement entre 25°C et 35°C.

18. Polymère d'acrylamide ou copolymère d'acrylamide et d'acide (méth)acrylique ou l'un de ses sels, en microémulsion pouvant être obtenu selon le procédé de n'importe laquelle des revendications 1 à 17.
